# EUROPEAN PATENT SPECIFICATION

(11) **EP 2 796 791 B1**
(45) Date of publication and mention of the grant of the patent: **19.08.2020**
(21) Application number: 14161846.2
(22) Date of filing: 26.03.2014
(51) Int. Cl.: F24C 3/08, F23D 14/02, F23D 14/14, F23N 3/08

(54) **High efficiency gas oven and method for operating thereof**
Hochleistungsgasofen und Betriebsverfahren dafür
Four à gaz à haute rendement et son procédé de fonctionnement

(30) Priority: 23.04.2013 IT TO20130331
(43) Date of publication of application: 29.10.2014
(73) Proprietor: Whirlpool EMEA S.p.A., 20016 Pero (MI) (IT)
(72) Inventor: Gasparini, Alberto, 60044 Fabriano (AN) (IT)
(74) Representative: Spina, Alessandro

(56) References cited:
- EP-A1- 2 184 545
- EP-A2- 0 809 078
- EP-A2- 1 865 754
- WO-A1-02/10648
- JP-A- S63 290 318
- US-A- 4 639 213
- US-A- 4 951 648
- US-A- 5 080 087
- US-A1- 2005 056 267

## Description

The present invention refers in general to a gas cooking oven, in which a cavity is heated through heat energy provided by a burner.

In this description, the drawings and the appended claims will mainly refer to gas cooking ovens for domestic use, and this for simplicity of description, and however, it should not be understood in a limiting way.

The invention also applies, in fact, to professional or industrial cooking ovens, stand-alone or combined with cookers, hobs, stoves and the like, for the preparation of food through their heating with heat produced by combustion of gas or preferably other similar combustion.

Therefore, where in the following we will refer to gas cooking ovens, this must not be understood in a limiting way and can also be extended to other apparatuses mentioned above, as well as those which will be apparent from the present description.

Gas cooking ovens here considered are generally of muffle type, or comprise a cavity or cooking chamber in which are arranged the food to be cooked, which is heated by the heat produced by the flame of a burner.

Normally, the latter is arranged on the bottom of the cavity and is protected by a grid or a perforated plate which allows to pass the combustion fumes, which propagate by convection in the oven cavity.

The burner is usually atmospheric type, in the sense that the gas under pressure coming from the distribution network or from a gas cylinder, is mixed with ambient air and for this purpose are typically employed mixers which use the Venturi effect, in which the gas flows attracting the external air which is mixed with it according to a ratio that is normally lower than stoichiometric one.

The air is mixed with gas in this step is also called primary, while the one that is used to reach the stoichiometric proportion is called secondary air.

This is the air present in the oven cavity so that it is not always in the conditions to have optimum combustion.

Indeed, it is understandable that after a certain time of oven operation, the air inside became warm and also the supply of oxygen in the cavity is less than the initial one.

It follows that the combustion conditions are altered in some way, and then such as not to allow a high satisfactory energetic efficiency, differently from what is increasingly required with the technical regulations for household appliances.

Furthermore, it should be noted that the heat powers achievable with the known gas cooking ovens are limited in the sense that at equal size of the cooking oven is not possible to increase further those of the burner; therefore, for example, in the common household ovens (which normally dimensions are 60cm x 60cm x 60cm) to reach at the maximum power of about 3 kW.

The US Patent US 4,639,213 to SIMPSON Thomas describes an infrared heat device utilizing a ceramic burner tile operating in a confined combustion chamber. Inlet gas flow, metered by an orifice, is boosted as required by the air pressure provided in at least approximately Stoichiometric ratio to compensate for increased back pressure.

Furthermore, the US Patent 6,881,054 to MAYTAG CORPORATION describes a gas cooking appliance including a combined radiant/convection cooking system mounted below a bottom wall portion of an oven cavity. The combination cooking system includes a gas burner in the form of a ring element having a central portion within which is positioned a convection fan. In addition to the convection fan, a forced air combustion fan supplies a combustion airflow to the gas burner.

Both patents provide solutions for increasing the thermal power produced by a gas burner, but they do not discuss how to control said burner in an effective way; indeed, a gas burner able to generate a higher level of thermal power requires an improved control system because said burner is able to produce quicker temperature variations than a regular burner in an oven of the same size.

Further, a gas cooking oven, comprising at least one cavity with a burner associated therewith for the heating thereof, wherein the burner is of the blown type, wherein a gaseous combustible mixture is fed by fan means, the burner comprising a radiating element, said oven comprising a plate substantially transparent to radiations in the infrared range, which is associated with the burner, thereby allowing irradiation into the cavity is known from documents US 4 951 648 A.

The present invention proposes to overcome this state of the art.

These and other objects are achieved by a gas cooking oven according to the appended claim 1. The invention also comprises a method for controlling the operation of the cooking oven so performed. Further detailed characteristics and advantages are described in the dependent claims.

The characteristics of the invention are specifically exposed in the appended claims to this description; those characteristics, the resulting effects and advantages achieved, will become better clear in the light of the embodiment of the invention which is exposed in the following with reference to the accompanying drawings, in which:

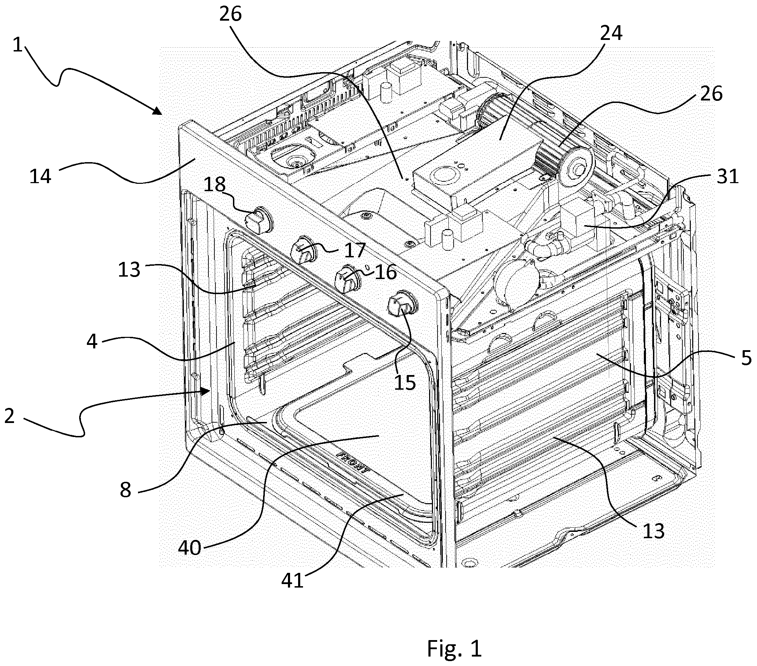

- fig. 1 shows an axonometric view, with the higher part removed, of a gas cooking oven according to the invention;

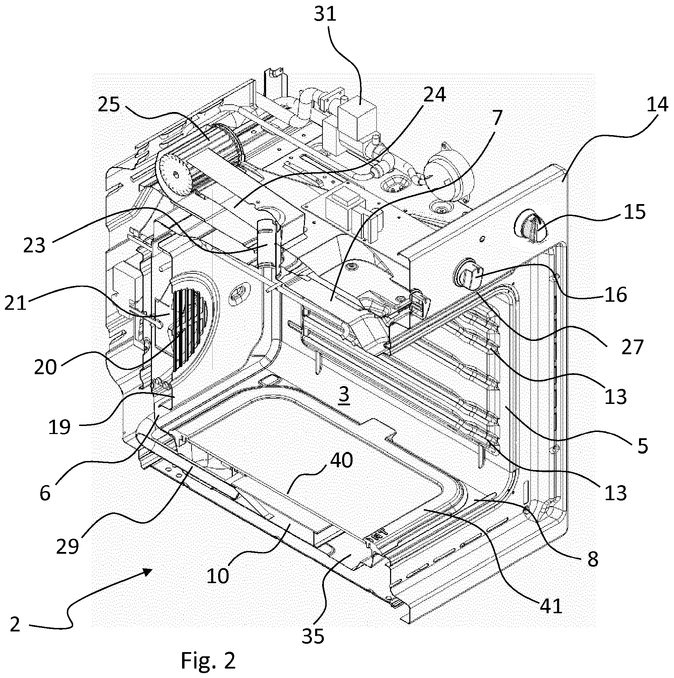

- fig. 2 shows an axonometric view of one half of the gas cooking oven of Fig. 1;

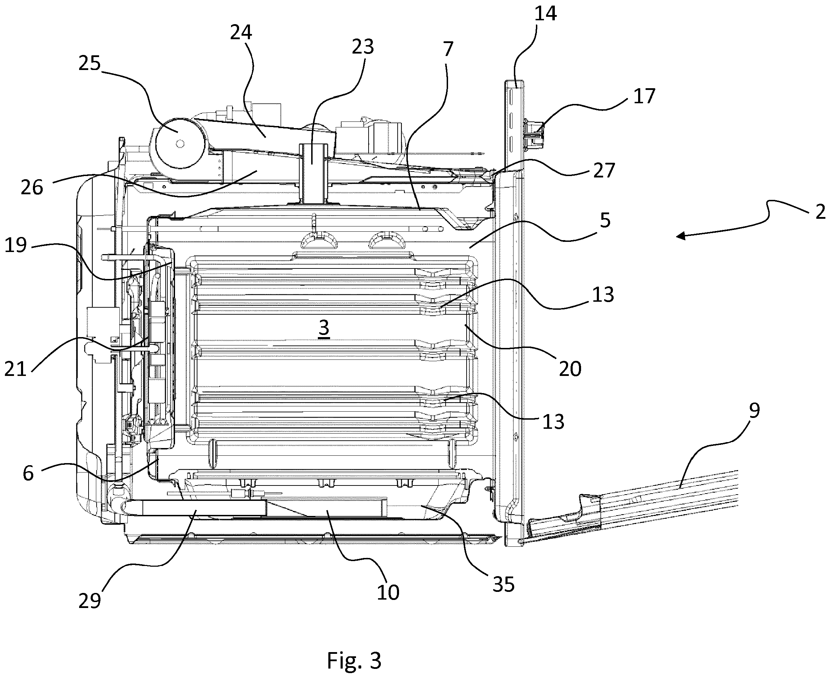

- fig. 3 is a side view of the cooking oven of Fig. 2;

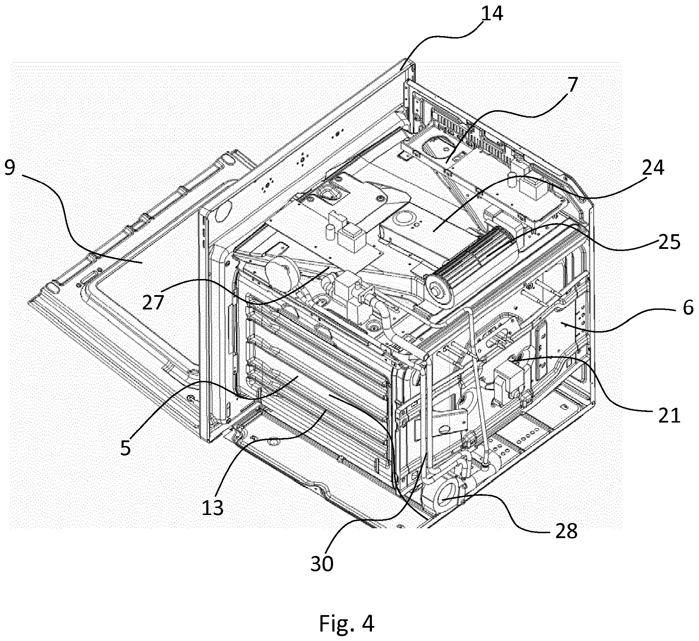

- fig. 4 is a beck perspective view of the cooking oven of Fig. 3;

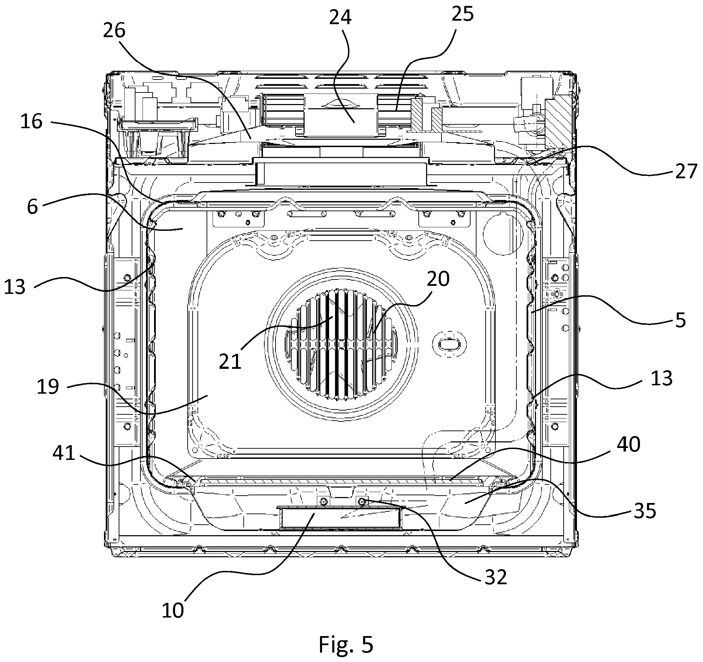

- fig. 5 is a front view of the cooking oven cavity of the previous figures;

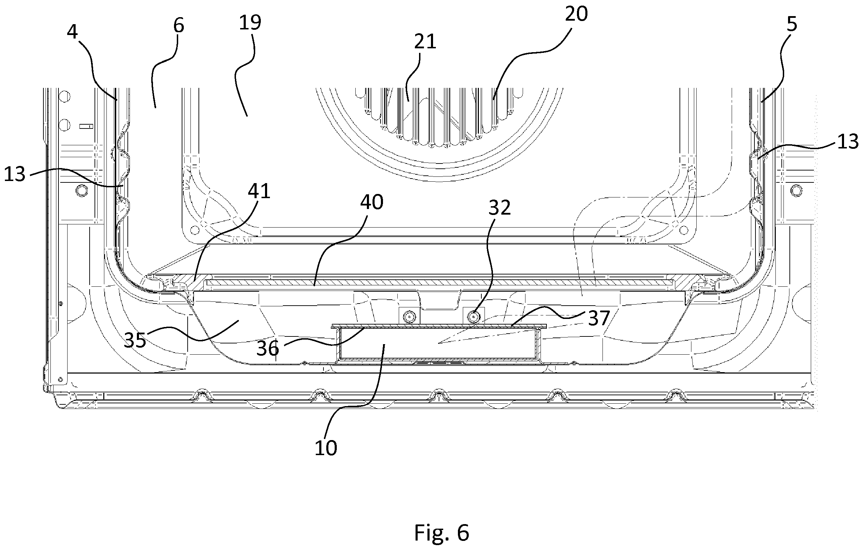

- fig. 6 shows an enlarged detail of fig. 5;

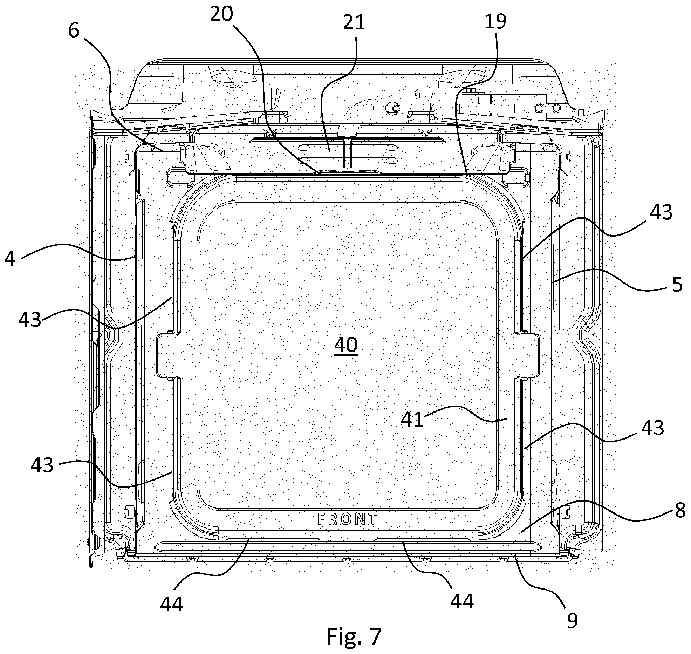

- fig. 7 is a plan view of the cooking oven cavity of the previous figures;
- fig. 8 shows in detail the cooking oven burner in the preceding figures;

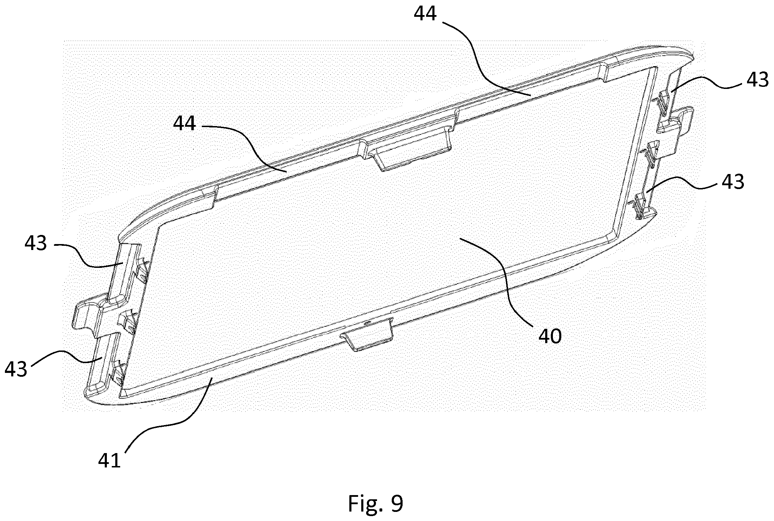

- fig. 9 shows a detail of the cooking oven of the previous figures;

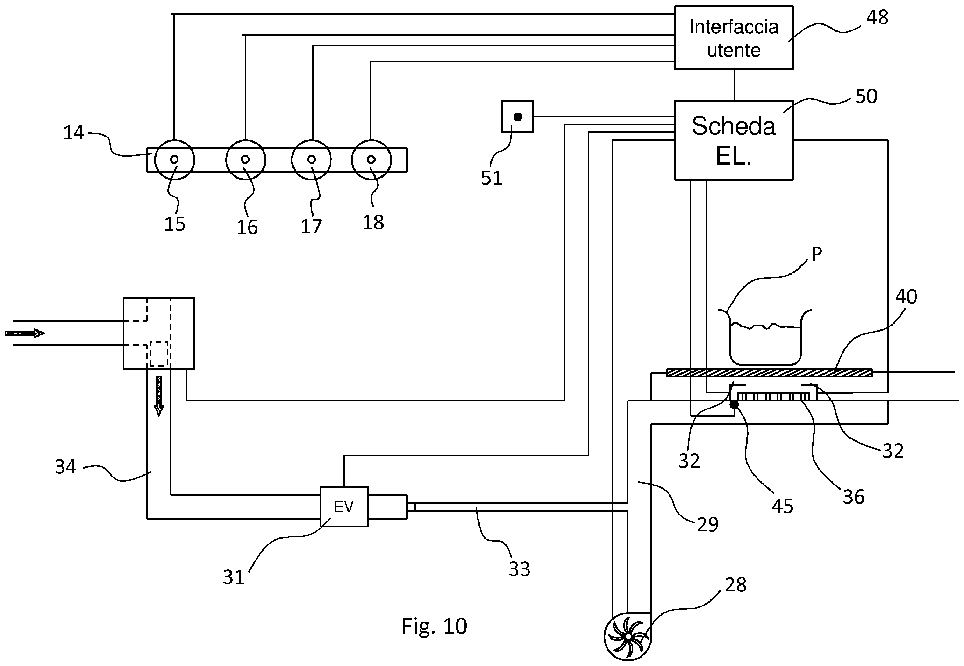

- Fig 10 is a operation diagram of the gas cooking oven of the previous figures.

With reference to the drawings above listed, within them is generally indicated one cooking oven according to the invention, which comprises a cooking chamber or cavity 3 of substantially parallelepiped shape, delimited by a pair of side walls 4, 5, a rear wall 6, an upper wall or ceiling 7, a bottom 8 in correspondence of which is located the burner 10, the cavity 3 is closed frontally by a door 9 in a manner known.

On the side walls 4 and 5 of the chamber there are deep-drawings 13 which serve to support grids, or shelves and other elements used in ovens for cooking food.

The front of the oven 1 in the position above the cavity 3 of the oven, there is a control panel 14 of the cooking oven with the knobs 15, 16, 17, 18 to adjust the gas flow, the selection of an operating cycle, the temperature setting, the timer setting.

In this example, the cavity 3 of the cooking oven is vented and for this purpose on the back wall 6 is applied a plate 19 with a grate20 behind which is located a fan 21, the latter allows the air circulation in the cavity 3 and for this purpose the air is sucked through the grate 20 and reintroduced into the cavity 3 in correspondence with a series of openings along the border of the plate 19.

This circulation takes place as a function of the operating cycle of the cooking oven and affects a portion of the air present in the cavity 3; another portion is evacuated from the chamber 3 through a chimney 23 which extends from the upper wall 7 of it, until a duct 24 of fumes conveying. These latter are conveyed to the suction of a cylindrical fan 25, as seen from the drawings, has a greater diameter than the duct 24 in order to suck air from the outside environment also, mixing it with that coming from the cavity 3 of the cooking oven.

According to this embodiment of the invention, the delivery duct of the fan 25 consists of a diffuser 26 configured substantially in a fan-shaped, which extends from the fan up to a front area of the cooking oven 2, interposed between the control panel 14 and the cavity 3 of the cooking oven.

Advantageously, the diffuser 26 has a tapered shape toward the front end which ends with a slot 27 from which air may flow out that allows to cool the panel 14 and the door handle of the cooking oven 9.

As can be seen from the drawings, the chimney 23 extends partly through the diffuser 26 before arriving in the duct 24 of fumes conveying.

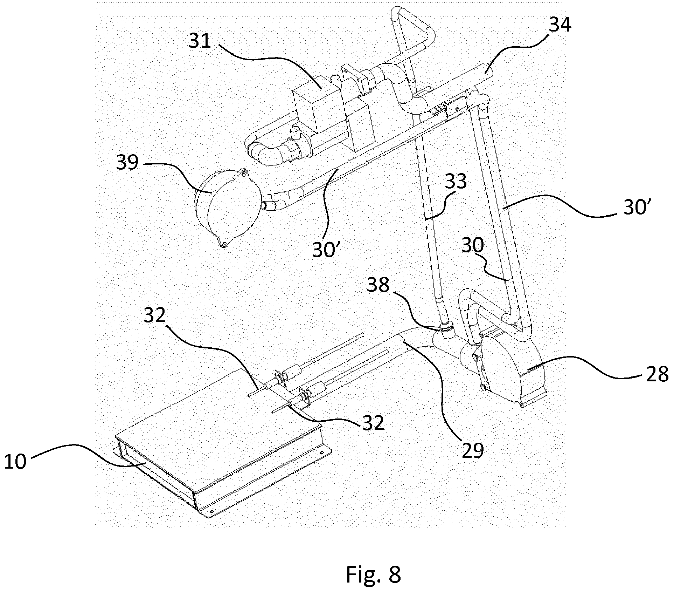

The heating of the cavity 3 is achieved with a burner 10 of blown type, visible in detail in Figure 8.

In the burner 10 the gas-air mixture is fed through a fan 28, to which the burner is connected by a collector 29, the fan 28 draws air from the outside blowing it into the collector 29 where it mixes with the gaseous combustible (for example methane, propane or other) coming from a duct 33, in a stoichiometric or slightly higher percentage.

The gas flow in the duct 33 is adjusted through the ON / OFF control of an solenoid valve 31 interposed between the duct 34 connecting the distribution net and the duct 33. In this way the combustion in the blown burner 27 can be made without the contribution of secondary air: in fact, the air-gas mixture can be controlled by imposing from one part a predetermined flow rate of air by controlling the speed of the fan motor, being on the other hand, the gas flow is also equal to a predetermined value, imposed by the injector 38 whose nozzle is calibrated to the predefined nominal power of the burner, in order to respect the optimal stoichiometric ratio for combustion in the burner 10, as a function of the nominal power of the latter.

The resulting combustion is able to supply a higher heat power, compared to that of common atmospheric burners (for example with primary and secondary air ones).

For its correct operation, the cooking oven 1 is arranged with at least one nozzle, whose size depending on the type of gas (for example, methane, propane, etc..) whereby it will be fed.

Correspondingly, there will be a predetermined value of the speed of the fan motor to impose a predetermined air flow rate.

The fan is therefore preferably activated by continued powered motor without brushes (so-called brushless DC) with control of the speed rotation.

In this way is possible to set a predetermined speed rotation of the fan and the relative air flow rate supplied by it depending on the type of gas and the nozzle used for the cooking oven.

This then makes the cooking oven functionally flexible as it is easily adaptable to operate with city gas, gas cylinder, or other.

The control of said speed rotation is referred to a electronic control system 50 of the cooking oven 2. The turning on of the burner flame is effected by at least one piezoelectric electrode 32 commanded by the control system of the cooking oven, on which we will return in more detail in the following.

The detection of the ignition of the burner, preferably by a ionization system, comprising a flame sensor which generates a signal detectable by the cooking oven control system .

Preferably the flame sensor is integrated in the electrode 32.

Alternatively the burner ignition can be detected by the thermocouple. The blown burner 10 is housed in a seat 35 on the bottom 8 of the cooking oven muffle and it is associated on the upper part by a radiating element.

The latter can be made according to various configurations, for example, in the case shown in the drawings the radiating element comprises a perforated plate 36 (with diameter smaller holes of reduced size in the order of 0.8 to 3 mm), on which is applied a metal fiber or metal foam 37; alternatively the radiating element can be achieved with a ceramic tile perforated (with holes of reduced dimension of 0.8 to 3 mm), having a thickness between 2 mm and 1 cm.

The effect of the radiant element so performed, consists of causing a big load loss to the flow of the air-gas mixture coming from the burner 10, so that the flame remains low (carpet) and makes incandescent the upper face of the burner.

The presence of a radiating element of this type, ceramic, metal or other suitable material, allows to achieve a contribution to the heating given by the direct infrared irradiation that it releases, to this purpose, the choice of material will preferably be tied to its emission properties in the infrared range.

For example, according to the possible solutions, the perforated plate 36 and / or the associated membrane radiant 37 may be of metal, or combined and / or replaced with elements in ceramic material such as cordierite or other.

The overall thickness of the perforated plate 36 (which for example is greater in the case of use of ceramic materials), the membrane 37 and the size of the small output holes of the flames, may however vary depending on the combustible, for example methane, LPG, butane, etc... What matters is that the radiating element is resistant to high temperatures corresponding to those of the flame (600-1000 ° C) and that has good irradiation properties, in order to release radiation in the infrared range with a high heating efficiency.

The effect of irradiation is favored by the presence of a transparent plate 40, disposed above the burner 10 at a distance preferably comprised between 10 and 30 mm, which is then heated uniformly at temperatures of the order of some hundreds degrees.

Advantageously, the plate 40 is made of glass ceramic material or another suitable material which ensures similar resistance to temperature and heating shock, as well as a high transparency to infrared radiation.

According to the example shown in the drawings, the plate 40 is associated to a frame 41 configured in a framed shape, which is coupled with the seat 35 of the burner 10 closing it similarly to a lid, but remaining coplanar with the bottom 8 of the cooking oven cavity .

The frame 41 is made of cast iron, enameled metal sheet or other suitable material and along its edge there are some ports 43, 44 which when the frame is applied to the seat 35, it allows the air flow towards the cavity 3 of the cooking oven.

The cooking oven 1 with the blown burner 10 is able to provide a heat power of about 4-6 kW, which is double that of the common cooking ovens with atmospheric burner, it must be emphasized that this result is achieved without open flames in the cavity, so that the burner does not interfere with, nor is influenced by, the hot air present in the cavity 3.

The heating efficiency is dictated by the fact that the heat is carried both in the form of radiating from the burner 10 by irradiation from the perforated plate 36, of the fiber 37 and (in part) of the plate 40 towards the cooking oven cavity 3, and convection of the combustion fumes of the burner 10 which, by the housing seat 35 of the latter, rising upwards in the cooking oven cavity 3 passing through the said passage ports 43, 44.

Furthermore, it must also considered the contribution of heating conduction provided by the plate 40 to a possible dripping pan, baking tin, pot or other container from the cooking oven placed on it.

Indeed, an advantage achieved by the cooking oven of the present invention is to have a cavity 3 whose inferior bottom wall 8 is, at least in part, constituted by the plate 40 which can also serve as a supporting surface for a cooking container: being the plate transparent in the infrared range released from the perforated plate 36 and the fiber 37 of the burner 10, it does not interfere with the radiant heat which they release.

Returning to the operation and control method of the burner 10, it is equipped with an electronic ignition system (piezoelectric or similar) with a pair of ignition electrodes 32 and a sensor for detecting the flame, both connected to a control board 50 of the gas cooking oven 1; as mentioned above, the flame sensor is, in this case, advantageously formed by the same electrode 32, but could be made separately, for example with a thermocouple.

The temperature of the cavity 3 is adjusted by a thermostat 51 connected to the control board 50, the latter receives signals from an infrared sensor 45 for detecting the temperature of a pot P resting on the transparent plate 40, which sensor is located on the below the plate 40 and near the radiating plate 36 of the burner 10 and it is positioned so that its radiation is oriented towards the bottom of the pot.

It should be noted that the choice of an infrared sensor is advantageous as being the cover plate 40 transparent to infrared radiations in order to allow the transmission of radiant heat, the sensor 45 can operate in conditions suitable for its operation.

Finally, preferably the cooking oven 1 according to the invention is equipped with a user interface 48, through which a user can check the operation; optionally the user interface 48 also includes a display or in any case an indicator to visualize the operating status (for example temperature, cooking time, etc..) and in order to allow the user to perform the necessary operations

The user interface is associated with the panel 14 where the control knobs 15-18 are located, the latter, however, may be replaced by buttons, keyboards or any other equivalent element, which allows to set the cooking oven operation as explained below.

To this purpose it must be noted that when a user wants to use the cooking oven 1, it is set an operating cycle a desired temperature for the cavity 3 with one of the knobs 15-18.The electronic board 50 receives the signal from the corresponding knob and controls the ignition of the burner 10 and the gas-air mixture supply, the air being supplied by the fan 28 and the gas from the opening of the solenoid valve 31.

The electronic board 50 also monitors the correct operation of the burner by measuring the flow rate of air generated by the fan.

Preferably this is occurs through indirect measurement, by detecting the speed of the fan 28.

Alternatively, or in combination with the indirect measurement, the monitoring the air flow rate can be done with a direct measurement, for example, reading a signal generated by a differential pressure switch 39; the differential pressure switch 39 is connected to two ducts 30, 30' connected respectively upstream and downstream of a throttle ring (not visible in Figure 8) placed on the delivery duct of fan outlet 28, along the junction with the duct 29. The pressure drop on the ring, measured by the differential pressure switch 39, provides a measure of the air flow rate.

In case of anomaly, or when the measured air flow rate is less than a predetermined threshold value, the electronic board 50 commands the closing or prevents the opening of the solenoid valve 31, preventing the gas supply; subsequently provides to disable the fan .

Typically, the regulation of the temperature (depending on the setting of the user) performs with controlling turning on and off of the burner 10, so that it alternates work phases at nominal fixed power to rest phases.

In this way, the burner 10 is operating in a regime of controlled combustion, with a required heat power and minimizing the uncombusted harmful gases generated by combustion.

Therefore, the thermostat 51 signals the control board 50 the temperature level in the cavity 3; in order to maintain the current temperature corresponding to that required by the user, the control board 50 operates the burner 10. Therefore according to a preferred embodiment of operation of the burner 10, it is operated in a regime of "on-off" whereby in order to maintain the temperature in the cavity 3 in an interval straddling the required temperature, the burner 10 is activated until the temperature in the cavity does not exceed the upper level of said interval, in order to interrupt the operation until the temperature in the cavity falls below the lower level of said interval.

In combination with (or in alternative to) this context, the temperature sensor 45 detects the temperature of the bottom of a pot P present in the cooking oven cavity 3 and in the case it appears out of the set and / or processed values by the control board 50, regulates the operation of the burner 10 according to the same logic as "turning on-off", then as long as the temperature of the pot P does not return within the established values, the burner is turned-of arrests.

The turning-off of the burner 10 is achieved by stopping the gas flow in the duct 33 through the solenoid valve 31; contextually, or with a slight delay, the control board50 also controls the stopping of the fan 28 in order to stop the air flow to the burner.

When the thermostat 51 (or sensor 45) detects that the temperature in the cavity 3 (or of the pot P) decreases below a preset level, the control board 50 controls the reignition of the burner 10, in a manner similar to what was seen before.

Therefore gas flows are restored by opening the solenoid valve 31 and the air by starting the fan 28, while the ignition electrodes 32 control the mixture combustion and the sensor detection of the flame (associated to the electrodes 32, or separate from them) secures that there is indeed the presence of the flame.

As mentioned above, the electrodes 32 can be integrated into a single electrode or in another dedicated device, with similar functions, that is those of gaseous mixture ignition and the flame presence detection.

The cooking oven 1 then restarts to operate to complete the cooking cycle set by the user with the knob 47 or to restore the temperature set by the user.

In accordance with a preferred embodiment, the cooking oven 1 presents the safety means to prevent the overheating of the blown burner 10 and / or an excessive speed of cavity heating .

To this purpose in the cooking oven there is a timer (not shown in the figures as known per se) operatively connected to the burner 10 and the control board 50, which controls the stop of the burner after a predetermined period of continuous operation.

This allows to prevent the overheating of the burner and its possible damage; this also allows to prevent the high heat capacity of the burner 10, if applied continuously for too long can cause burns to the food contained in the cavity. Indicatively the duration of continuous operation of the burner after which the timer will stop the operation, can be of 40-60 seconds; after which it remains off for a sufficient time to bring back the temperature within predetermined values.

The stopping time depends on various factors (such as from what has turned on the cooking oven, if you are in the transitional regime after ignition or during a cooking cycle started, and so on) and can vary from 15 to 25 seconds, depending on the case.

It should be noted that the burner timer safety system, can operate both in a stand-alone, and in combination with other settings provided for the operation of the cooking oven based on the thermostat 50 and / or the infrared sensor present in the cavity.

In the light of what has been explained so far is possible to understand how the gas cooking oven 1 solves the technical problem that is the basis of the invention. Indeed, the use of the burner 10 of blown type allows to reach higher heat powers, higher than those of normal atmospheric burners.

The cooking oven 1 therefore offers much higher performance compared to cooking ovens with atmospheric-burners.

It must be noted that in this respect it would be possible to control the blown burner 10 differently from what has been explained above, for example by a control modulated in time (for example not discontinuous as in the example above) by following the operation curves in time that depend on the cooking cycle or on the temperature of the pot P, set by the user.

Alternatively, the control of the burner 10 may follow a cooking profile stored in the electronic board 40, in which a different cooking step corresponds different temperatures (for example in a cooking cycle of one hour, it can be imposed the temperature of 120 ° C for the first 15 minutes, the temperature of 250° C for the next 30 minutes and the temperature of 90 ° C for the last 15 minutes).

However, the solution considered here has the advantage of simplicity, as it requires no complicated control systems because the temperature sensor 45, the solenoid valve 31 and the fan 28 are sufficient, to make cycles of "turning of the burner 10, as set by the user.

Naturally there are possible variants of the invention than those previously described.

For example it is easy to equip the cooking oven 1 of timer means for operation with the blown burner 10; in practice it would add a command over to the knob 47, which allows the user to set as required the time of the cooking oven operation, turning off the burner 10 once elapsed the time interval set.

It is evident then that although reference is made to the knobs 15-18 for the cooking oven control, it can prepare in its place control buttons or other equivalent systems.

It should also be stated that the fact of having a cooking oven with blown burner, does not prevent the cooking oven itself from being also equipped with heating elements such as those present on the upper wall of the normal cooking oven for grilling foods.

These variants therefore are within the scope of the claims which follow.

## Claims

1. Gas cooking oven, comprising at least one cavity (3) with a burner (10) associated therewith for the heating thereof, wherein the burner (10) is of the blown type, wherein a gaseous combustible mixture is fed by fan means (28, 30, 31), the burner (10) comprising a radiating element (36, 37);
the gas cooking oven comprising a plate (40) substantially transparent to radiations in the infrared range, which is associated with the burner (10), thereby allowing irradiation into the cavity (3), and **characterized in that** it further comprises an infrared sensor (45) which is located below the plate (40) and near a radiating plate (36) of the burner (10), in particular near a radiating plate (36) of the radiating element (36, 37) of the burner (10), and which is positioned so that its radiation is oriented towards the bottom of a pot.

2. Oven according to claim 1, wherein the blown burner (10) transfers heat into the cavity (3) also by convection.

3. Oven according to any of claims 1 to 2, wherein the radiating element (36, 37) has a plurality of holes, thereby substantially forming a flame carpet.

4. Oven according to claim 3, wherein the radiating element (36, 37) is adapted to radiate in the infrared range when it is heated by the flame of the burner.

5. Oven according to claim 4, wherein the radiating element (36, 37) is at least partly made of metal, ceramic, glass-ceramic or a similar material.

6. Oven according to any of the preceding claims, comprising means (45, 51) for detecting the temperature of the cavity (3) and/or of an object placed therein.

7. Oven according to any of the preceding claims, comprising means (28, 31, 32, 44, 45, 48, 50) for autonomously turning off and on the burner (10), said turning off or turning on occurring in accordance with predetermined time intervals and/or temperature values.

8. Oven according to any of the preceding claims, wherein the burner (10) is housed in a seat (35) adjacent to the bottom of the cavity (3), above which the plate (40) substantially transparent to radiations in the infrared range is applied, so as to let at least a part of the combustion fumes of the burner flow from the seat (35) to the cavity (3) of the oven.

9. Oven according to claim 8, wherein the plate (40) is associated with a frame (41) resting on the edge of the seat (35) of the burner, which frame (41) comprises ports (43, 44) for letting the fumes flow from the seat (35) to the cavity (3), so as to give a convective contribution to the heating of the cavity.

10. Oven according to any of the preceding claims, comprising means (28, 50; 39) for detecting the air flow rate supplied to the burner (10).

11. Oven according to claim 10, wherein the means for detecting the air flow rate comprise a fan (28) in fluid communication with the burner (10), and a device (50) for detecting the operating speed of the fan.

12. Oven according to claim 11, wherein the means for detecting the air flow rate comprise a differential pressure switch (39) connected to a pair of ducts (30, 30') which are respectively connected upstream and downstream of a throttle ring or the like, which is associated with the delivery side of a fan (28) in fluid communication with the burner (10).

13. Method of operation of an oven according to any one of the preceding claims, comprising the steps of:
- setting an operating cycle of the oven as a function of time and/or temperature values;
- turning on and off the burner (10) as a function of at least one of the following alternatives:
i) the temperature in the cavity (3) of the oven;
ii) the temperature of an object (P) in the cavity (3) of the oven;
iii) preset time intervals;
**characterized in that**
the temperature of an object (P) in the cavity (3) is detected by an infrared sensor (45) which is located below the plate (40) and near the radiating plate (36) of the burner (10), and which is positioned so that its radiation is oriented towards the bottom of a pot.

14. Method according to claim 13, comprising at least one step of controlling the air flow rate supplied to the burner (10) by controlling the speed of a fan (28) in fluid communication with the burner.

15. Method according to claim 14, comprising a step of monitoring the proper operation of the burner, which comprises measuring the air flow rate generated by the fan (28) and, if said measured air flow rate is below a predetermined threshold value, closing an electrovalve (31) or preventing it from opening, thereby stopping the gas supply.

## Patentansprüche

1. Gasbackofen, umfassend zumindest einen Hohlraum (3) mit einem damit zugeordneten Brenner (10) zum Erhitzen davon, wobei der Brenner (10) vom Typ Gebläsebrenner ist, wobei eine brennbare gasförmige Mischung anhand von Lüftermitteln (28, 30, 31) eingespeist wird, wobei der Brenner (10) ein strahlendes Element (36, 37) umfasst;
wobei der Gasbackofen eine im Wesentlichen für Strahlungen im Infrarotbereich durchgängige Platte (40) umfasst, die dem Brenner (10) zugeordnet ist und somit Strahlung in den Hohlraum (3) zulässt, und **dadurch gekennzeichnet, dass** er weiter umfasst
einen Infrarotsensor (45), der zwischen der Platte (40) und in der Nähe einer strahlenden Platte (36) des Brenners (10) angebracht ist, insbesondere in der Nähe einer strahlenden Platte (36) des strahlenden Elements (36, 37) des Brenners (10), und so positioniert ist, dass ihre Strahlung auf den Boden eines Kochtopfs ausgerichtet ist.

2. Ofen nach Anspruch 1, wobei der Gebläsebrenner (10) Hitze in den Hohlraum (3) auch über Konvektion überträgt.

3. Ofen nach einem der Ansprüche 1 bis 2, wobei das strahlende Element (36, 37) eine Vielzahl von Löchern aufweist und dadurch im Wesentlichen einen Flammenteppich bildet.

4. Ofen nach Anspruch 3, wobei das strahlende Element (36, 37) angepasst ist, um im Infrarotbereich zu strahlen, wenn es von der Flamme des Brenners erhitzt wird.

5. Ofen nach Anspruch 4, wobei das strahlende Element (36, 37) zumindest teilweise aus Metall, Keramik, Glaskeramik oder einem ähnlichen Material hergestellt ist.

6. Ofen nach einem der vorstehenden Ansprüche, umfassend Mittel (45, 51) zum Erkennen der Temperatur des Hohlraums (3) und/oder eines darin hineingelegten Gegenstands.

7. Ofen nach einem der vorstehenden Ansprüche, umfassend Mittel (28, 31, 32,44,45, 48, 50) zum automatischen Aus- und Einschalten des Brenners (10), wobei das Aus- oder Einschalten gemäß vorbestimmter Zeitintervalle und/oder Temperaturwerte erfolgt.

8. Ofen nach einem der vorstehenden Ansprüche, wobei der Brenner (10) in einem Sitz (35) untergebracht ist, angrenzend zum Boden des Hohlraums (3), über dem die im Wesentlichen für Strahlung im Infrarotbereich durchgängige Platte (40) angewendet ist, um zumindest einen Teil der Verbrennungsrauchgase des Brenner von dem Sitz (35) zu dem Hohlraum (3) des Ofens strömen zu lassen.

9. Ofen nach Anspruch 8, wobei die Platte (40) einem Rahmen (41) zugeordnet ist, der auf einem Rand des Sitzes (35) des Brenners ruht, wobei der Rahmen (41) Öffnungen (43, 44) umfasst zum Durchlassen der Rauchgase von dem Sitz (35) zu dem Hohlraum (3), um einen Konvektionsbeitrag zum Erhitzen des Hohlraums zu erbringen.

10. Ofen nach einem der vorstehenden Ansprüche, umfassend Mittel (28, 50; 39) zum Erkennen des an den Brenner (10) abgegebenen Luftdurchsatzes.

11. Ofen nach Anspruch 10, wobei die Mittel zum Erkennen des Luftdurchsatzes ein Gebläse (28) in Fluidkommunikation mit dem Brenner (10) und eine Vorrichtung (50) zum Erkennen der Betriebsgeschwindigkeit des Gebläses umfassen.

12. Ofen nach Anspruch 11, wobei die Mittel zum Erkennen des Luftdurchsatzes einen Differentialdruckschalter (39) umfassen, der mit einem Paar von Leitungen (30, 30') verbunden ist, die jeweils stromaufwärts und stromabwärts zu einem Drosselring oder ähnlich, der der Austrittsseite eines Gebläses (28) in Fluidkommunikation mit dem Brenner (10) zugeordnet ist, verbunden sind.

13. Verfahren zum Betreiben eines Ofens nach einem der vorstehenden Ansprüche, umfassend die Schritte:
- Einstellen eines Betriebszyklus des Ofens als Funktion von Zeit- und/oder Temperaturwerten;
- Ein- und Ausschalten des Brenners (10) als Funktion von zumindest einer der nachstehenden Alternativen:
i) der Temperatur im Hohlraum (3) des Ofens;
ii) der Temperatur eines Gegenstands (P) im Hohlraum (3) des Ofens;
iii) voreingestellten Zeitintervallen;
**dadurch gekennzeichnet, dass**
die Temperatur eines Gegenstands (P) um Hohlraum (3) von einem Infrarotsensor (45) erkannt wird, der unter der Platte (40) und in der Nähe der strahlenden Platte (36) des Brenners (10) angebracht ist, und der so positioniert ist, dass seine Strahlung auf den Boden eines Kochtopfs ausgerichtet ist.

14. Verfahren nach Anspruch 13, umfassend zumindest einen Schritt des Steuerns des an den Brenner (10) abgegebenen Luftdurchsatzes durch Steuern der Geschwindigkeit eines Gebläses (28) in Fluidkommunikation mit dem Brenner.

15. Verfahren nach Anspruch 14, umfassend einen Schritt des Überwachens des ordnungsgemäßen Betriebs des Brenners, der Messen des von dem Gebläse (28) erzeugten Luftdurchsatzes, und wenn der gemessene Luftdurchsatz unter einem vorbestimmten Schwellenwert liegt, Schließen eines Elektroventils (31) oder Verhindern seines Öffnens und somit Unterbrechen der Gasabgabe umfasst.

## Revendications

1. Four de cuisine au gaz, comprenant au moins une cavité (3) avec un brûleur (10) associé à celle-ci pour le chauffage de celle-ci, dans lequel le brûleur (10) est du type soufflé, dans lequel un mélange de combustible gazeux est apporté par des moyens ventilateurs (28, 30, 31), le brûleur (10) comprenant un élément rayonnant (36, 37) ;
le four de cuisine au gaz comprenant
une plaque (40) sensiblement transparente à des rayonnements dans la gamme de l'infrarouge, qui est associée au brûleur (10), permettant ainsi une irradiation dans la cavité (3), et **caractérisé en ce qu'**il comprend en outre
un capteur infrarouge (45) qui est situé en dessous de la plaque (40) et près d'une plaque rayonnante (36) du brûleur (10), en particulier près d'une plaque rayonnante (36) de l'élément rayonnant (36, 37) du brûleur (10), et qui est positionné de sorte que son rayonnement soit orienté vers le fond d'une casserole.

2. Four selon la revendication 1, dans lequel le brûleur (10) soufflé transfère de la chaleur dans la cavité (3) également par convection.

3. Four selon l'une quelconque des revendications 1 à 2, dans lequel l'élément rayonnant (36, 37) présente une pluralité de trous, formant ainsi sensiblement un tapis de flammes.

4. Four selon la revendication 3, dans lequel l'élément rayonnant (36, 37) est adapté pour rayonner dans la gamme de l'infrarouge lorsqu'il est chauffé par la flamme du brûleur.

5. Four selon la revendication 4, dans lequel l'élément rayonnant (36, 37) est au moins en partie fait de métal, de céramique, de vitrocéramique ou d'une matière similaire.

6. Four selon l'une quelconque des revendications précédentes, comprenant des moyens (45, 51) permettant de détecter la température de la cavité (3) et/ou d'un objet placé dans celle-ci.

7. Four selon l'une quelconque des revendications précédentes, comprenant des moyens (28, 31, 32, 44, 45, 48, 50) permettant d'éteindre et d'allumer de manière autonome le brûleur (10), lesdits extinction ou allumage se produisant conformément à des intervalles de temps et/ou valeurs de température prédéterminés.

8. Four selon l'une quelconque des revendications précédentes, dans lequel le brûleur (10) est contenu dans un siège (35) adjacent au fond de la cavité (3), au-dessus duquel la plaque (40) sensiblement transparente à des rayonnements dans la gamme de l'infrarouge est appliquée, de manière à laisser au moins une partie des fumées de combustion du brûleur circuler depuis le siège (35) jusqu'à la cavité (3) du four.

9. Four selon la revendication 8, dans lequel la plaque (40) est associée à un cadre (41) reposant sur le bord du siège (35) du brûleur, lequel cadre (41) comprend des orifices (43, 44) permettant de laisser les fumées circuler depuis le siège (35) jusqu'à la cavité (3), de manière à donner une contribution convective au chauffage de la cavité.

10. Four selon l'une quelconque des revendications précédentes, comprenant des moyens (28, 50 ; 39) permettant de détecter le débit d'air fourni au brûleur (10).

11. Four selon la revendication 10, dans lequel les moyens permettant de détecter le débit d'air comprennent un ventilateur (28) en communication de fluide avec le brûleur (10), et un dispositif (50) permettant de détecter la vitesse de fonctionnement du ventilateur.

12. Four selon la revendication 11, dans lequel les moyens permettant de détecter le débit d'air comprennent un commutateur à pression différentielle (39) relié à une paire de conduits (30, 30') qui sont respectivement reliés en amont et en aval d'un anneau de régulation ou autre, qui est associé au côté refoulement d'un ventilateur (28) en communication de fluide avec le brûleur (10).

13. Procédé de fonctionnement d'un four selon l'une quelconque des revendications précédentes, comprenant les étapes consistant à :
- régler un cycle de fonctionnement du four en fonction de valeurs de temps et/ou de température ;
- allumer et éteindre le brûleur (10) en fonction d'au moins une des possibilités suivantes :
i) la température dans la cavité (3) du four ;
ii) la température d'un objet (P) dans la cavité (3) du four ;
iii) des intervalles de temps préréglés ;
**caractérisé en ce que**
la température d'un objet (P) dans la cavité (3) est détectée par un capteur infrarouge (45) qui est situé en dessous de la plaque (40) et près de la paque rayonnante (36) du brûleur (10), et qui est positionné de sorte que son rayonnement soit orienté vers le fond d'une casserole.

14. Procédé selon la revendication 13, comprenant au moins une étape consistant à commander le débit d'air fourni au brûleur (10) en commandant la vitesse d'un ventilateur (28) en communication de fluide avec le brûleur.

15. Procédé selon la revendication 14, comprenant une étape consistant à surveiller le bon fonctionnement du brûleur, qui comprend une mesure du débit d'air généré par le ventilateur (28) et, si ledit débit d'air mesuré est en dessous d'une valeur de seuil prédéterminée, une fermeture d'une électrovanne (31) ou le fait de l'empêcher de s'ouvrir, arrêtant ainsi la fourniture de gaz.
